# EUROPÄISCHE PATENTSCHRIFT

(11) **EP 3 420 805 B1**
(45) Veröffentlichungstag und Bekanntmachung des Hinweises auf die Patenterteilung: **19.01.2022**
(21) Anmeldenummer: 18170522.9
(22) Anmeldetag: 03.05.2018
(51) Int. Cl.: A01F 15/07

(54) **UMHÜLLUNGSEINRICHTUNG, BLOCKIEREINRICHTUNG, BALLENPRESSE UND VERFAHREN ZUR ANPASSUNG EINER BALLENPRESSE AN EIN HÜLLMATERIAL**
WRAPPING DEVICE, BLOCKING DEVICE, BALER AND METHOD FOR ADAPTING A BALER TO A WRAPPING MATERIAL
DISPOSITIF D'ENROBAGE, DISPOSITIF DE BLOCAGE, PRESSE À BALLE ET PROCÉDÉ D'AJUSTEMENT D'UNE PRESSE À BALLE À UN MATÉRIAU D'ENROBAGE

(30) Priorität: 27.06.2017 DE 102017210813
(43) Veröffentlichungstag der Anmeldung: 02.01.2019
(73) Patentinhaber: Deere & Company, Moline, IL 61265 (US)
(72) Erfinder: Gresset, Pascal, 68163 Mannheim (DE); Perrotin, Frederic, 68163 Mannheim (DE)
(74) Vertreter: Reichert, Christian

(56) Entgegenhaltungen:
- DE-A1- 3 330 757
- DE-A1- 3 617 155
- DE-A1-102005 055 375
- DE-B3-102009 010 547

## Beschreibung

Die Erfindung betrifft eine Umhüllungseinrichtung zur Umhüllung eines Ballens mit einem Hüllmaterial für eine Ballenpresse, insbesondere eine landwirtschaftliche Ballenpresse zur Bildung vorzugsweise rundzylindrischer Ballen, mit einer insbesondere eine Messeranordnung aufweisenden, zwischen wenigstens einer Hüllmitteltrennposition und einer inaktiven Position bewegbaren Trenneinrichtung, eine Ballenpresse, insbesondere eine landwirtschaftliche Ballenpresse zur Bildung rundzylindrischer Ballen, und ein Verfahren zur Anpassung einer Ballenpresse an ein Hüllmaterial.

Ballenpressen sind bekannt und werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Ferner ist es bekannt, Ballenpressen mit einer Umhüllungseinrichtung auszurüsten, wodurch ein gepresster Ballen mit einem Hüllmaterial umhüllt wird und im Anschluss daran in umhüllter Form ausgeworfen werden kann. Der Ballen wird in einem zylindrischen Ballenpressraum der Ballenpresse während einer Ballenbildungsphase in Form gebracht. Dazu wird auf dem Boden liegendes Erntegut von einer Erntegutaufnahmeeinrichtung in den Ballenpressraum gefördert und durch entsprechend angeordnete Pressmittel ein zylindrischer Ballen geformt. Der Ballenpressraum kann als feste Presskammer, mit zylindrisch angeordneten Presswalzen, oder auch als variable Presskammer, mit variablen Pressmitteln, beispielsweise Pressriemen oder Pressketten, ausgebildet sein.

In einer der Ballenbildungsphase folgenden Hüllmaterialzufuhrphase wird von einer Hüllmaterialrolle ein Hüllmaterial in Richtung des mittlerweile ausgeformten Ballens in die Presskammer geführt und von der Außenseite des Ballens mitgerissen. Als Hüllmaterial wird üblicherweise Netz, Folie oder Garn verwendet. Durch den sich drehenden Ballen wird das Hüllmaterial in einer Umhüllungsphase um den Ballen geführt. Im Anschluss wird das Hüllmaterial durch eine Messeranordnung abgetrennt, bevor der Ballen in der Ballenauswurfphase ausgeworfen bzw. auf den Boden abgelegt wird.

Aus DE 3330757 A ist eine Ballenpresse gemäss dem Oberbegriff von Anspruch 1 bekannt.

Es sollen nun auch Hüllmaterialien eingesetzt werden, welche insbesondere derart ausgebildet sind, dass sie eine Sollrissstelle bzw. einen Sollrissbereich aufweisen und die somit den Einsatz einer Trenneinrichtung in der Art einer Messeranordnung überflüssig machen bzw. bei denen eine übliche Messeranordnung den Umhüllungsvorgang sogar behindern kann. Dies kann insbesondere dann nachteilig sein, wenn ein derartiges Hüllmaterial an einer konventionellen, eine Trenneinrichtung aufweisenden Ballenpresse eingesetzt werden soll, da es vorkommen kann, das die vorhandene Trenneinrichtung den Umhüllungsprozess behindert.

Die der Erfindung zugrunde liegende Aufgabe wird daher darin gesehen, eine Umhüllungseinrichtung, eine Ballenpresse und ein Verfahren anzugeben, durch welche die vorgenannten Nachteile überwunden werden.

Die Aufgabe wird erfindungsgemäß durch die Lehre der Patentansprüche 1, 7 und 8 gelöst. Weitere vorteilhafte Ausgestaltungen und Weiterbildungen der Erfindung gehen aus den Unteransprüchen hervor.

Diesbezüglich weist eine Umhüllungseinrichtung zur Umhüllung eines Ballens mit einem Hüllmaterial eine insbesondere eine Messeranordnung aufweisende, zwischen wenigstens einer Hüllmitteltrennposition und einer inaktiven Position bewegbare Trenneinrichtung auf, wobei wenigstens eine Blockiereinrichtung vorgesehen ist, die geeignet ist, die Trenneinrichtung daran zu hindern, die Hüllmitteltrennposition einzunehmen. Die Trenneinrichtung weist einen Antrieb in der Art einer Kolben-Zylinder-Anordnung auf bzw. wirkt mit einem solchen zusammen. Die Blockiereinrichtung ist geeignet den Kolben und/oder den Zylinder der Kolben-Zylinderanordnung in wenigstens einer Stellung festzulegen bzw. zu blockieren. Im Weiteren weist die Blockiereinrichtung wenigstens ein Schwenkelement auf. Das Schwenkelement ist derart ausgebildet, dass es in den Kolben eingreifen bzw. diesen umgreifen kann. Auf diese Weise kann ein Betrieb der Trenneinrichtung unterbunden werden, wenn diese nicht gebraucht wird und/oder einen Betrieb der Ballenpresse bzw. der Umhüllungseinrichtung stören könnte. Ein Festlegen bzw. Blockieren der Trenneinrichtung erfolgt durch einen mechanischen Stopp.

Eine derartige Umhüllungseinrichtung kann an einer Ballenpresse eingesetzt werden, bei der es sich vorzugsweise um eine landwirtschaftliche Ballenpresse zur Bildung vorzugsweise rundzylindrischer Ballen handelt. Es ist aber auch denkbar, dass es sich um eine industrielle Presse und/oder eine Presse zur Herstellung von Quaderballen handelt.

Insbesondere legt die Blockiereinrichtung die Trenneinrichtung zumindest im Wesentlichen in der inaktiven Position fest bzw. blockiert diese in dieser Position. Es ist aber auch denkbar, dass die Blockiereinrichtung die Trenneinrichtung in einer Position blockiert bzw. festlegt, in der kein Trennen eines Hüllmaterials durch die Trenneinrichtung erfolgt und/oder die Trenneinrichtung nicht auf das Hüllmaterial einwirkt und die nicht der inaktiven Position als solcher entspricht.

Insbesondere ist die Blockiereinrichtung geeignet, den Kolben und/oder den Zylinder der Kolben-Zylinder-Anordnung in wenigstens einer zumindest im Wesentlichen eingefahrenen oder ausgefahrenen Stellung festzulegen bzw. zu blockieren. Der Antrieb kann beispielsweise vorgesehen sein, um die Trenneinrichtung bzw. die Messeranordnung zu verschwenken und/oder translatorisch zu bewegen. Bei dem Antrieb kann es sich beispielsweise um einen Elektroantrieb, insbesondere einen Stellmotor, oder jeden anderen geeigneten Antrieb handeln. Besonders günstig ist es aber, wenn der Antrieb in der Art einer hydraulisch oder pneumatisch betätigbaren Kolben-

Zylinder-Anordnung ausgebildet ist. Es kann dabei in bekannter Art und Weise vorgesehen sein, dass die Trenneinrichtung bzw. die Messeranordnung in wenigstens einer der Stellungen mit dem Hüllmaterial zusammenwirkt, um dieses abzutrennen bzw. abzuschneiden. Die Blockiereinrichtung ist aber insbesondere geeignet, den Antrieb in einer Stellung festzulegen bzw. zu blockieren, der zumindest im Wesentlichen der inaktiven Position der Trenneinrichtung entspricht. Die Blockiereinrichtung ist dann vorzugsweise geeignet, den Kolben und/oder den Zylinder der Kolben-Zylinder-Anordnung, in wenigstens einer, zumindest im Wesentlichen eingefahrenen oder ausgefahrenen, Stellung festzulegen bzw. zu blockieren. Die Blockiereinrichtung wirkt mechanisch mit dem Antrieb zusammen bzw. mechanisch auf diesen ein. Eine derartige Ausgestaltung ist insbesondere einfach in der Ausführung bzw. sicher in der Wirkung.

Ein derartiges Schwenkelement kann beispielsweise als ein insbesondere mechanischer Anschlag, insbesondere für die Trenneinrichtung bzw. die Messeranordnung, wirken oder aber entsprechen mit oder auf den Antrieb wirken. Das Schwenkelement ist vorzugsweise einenends um einen Schwenkpunkt schwenkbar an einem Gehäuse der Trenneinrichtung angebracht und andernends ausgebildet, um mit dem Antrieb der Trenneinrichtung zusammenzuwirken.

Da das Schwenkelement derart ausgebildet ist, dass es in den Kolben eingreifen bzw. diesen umgreifen kann, kann auf einfache Art und Weise eine Bewegung des Kolbens der Kolben-Zylinder-Anordnung und damit der Trenneinrichtung bzw. der Messeranordnung unterbunden werden.

Ist ein Federmittel vorgesehen, das die Blockiereinrichtung bzw. das Schwenkelement in Richtung einer inaktiven Stellung, in der die Blockiereinrichtung bzw. das Schwenkelement nicht mit der Trenneinrichtung zusammenwirkt, und/oder einer aktiven Stellung, in der die Blockiereinrichtung bzw. das Schwenkelement die Trenneinrichtung daran hindert, die Hüllmitteltrennposition einzunehmen, belastet bzw. vorspannt, so kann die Blockiereinrichtung durch das Federmittel in seiner jeweiligen Stellung gehalten bzw. gesichert werden. Insbesondere sind die Federmittel in der Art einer Zugfeder ausgebildet.

Besonders günstig ist es, wenn das Federmittel an dem Schwenkelement an einem außerhalb der Schwenkachse gelegenen Angriffspunkt angreift, vorzugsweise derart, dass der Schwenkpunkt in der aktiven Stellung einerseits einer Wirklinie des Federmittels und in der inaktiven Stellung andererseits der Wirklinie angeordnet ist. Auf diese Art und Weise muss die Wirkung des Federmittels bzw. eine durch das Federmittel auf die Blockiereinrichtung bzw. das Schwenkelement ausgeübte Vorspannung überwunden werden, um die Blockiereinrichtung bzw. das Schwenkelement aus seiner aktiven in seine deaktivierte bzw. aus seiner deaktivierten in seine aktive Stellung bewegen bzw. verschwenken zu können.

Besonders günstig ist es, eine Ballenpresse, insbesondere eine landwirtschaftliche Ballenpresse zur Bildung rundzylindrischer Ballen, mit einer Umhüllungseinrichtung nach einem der vorherigen Ansprüche auszustatten. Auf diese Weise kann die Ballenpresse sowohl mit üblichen Hüllmaterialien, beispielsweise in der Art von Netz oder Folie betrieben werden, welche am Ende einer Umhüllungsphase von dem Ballen zu trennen bzw. abzuschneiden sind, wie auch mit Hüllmaterialien eingesetzt werden, die ein Abtrennen/Abschneiden nicht erfordern, da sie beispielsweise einen Sollrissbereich bzw. eine Sollrissstelle aufweisen. Bei der Ballenpresse handelt es sich insbesondere um eine landwirtschaftliche Ballenpresse zur Bildung rundzylindrischer Ballen. Die Presse kann aber auch im industriellen Bereich, beispielsweise zur Bildung von Ballen aus Papier, Müll, Stoff oder anderen Materialien eingesetzt werden. Es ist darüber hinaus denkbar, dass es sich um eine Presse zur Herstellung von Quaderballen handelt, wie sie sowohl im landwirtschaftlichen als auch im industriellen Bereich Verwendung findet.

Durch ein Verfahren bei dem die Blockiereinrichtung durch eine Bedienungsperson insbesondere manuell und vorzugsweise gegen eine Belastung durch ein Federmittel aus einer inaktiven Stellung in eine aktive Stellung bzw. aus einer aktiven in eine inaktive Stellung überführt wird, kann eine Ballenpresse in einfacher Art und Weise an unterschiedliche Arten von Hüllmaterial angepasst werden.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine schematische Seitenansicht einer Ballenpresse mit einer Umhüllungseinrichtung,
- Fig. 2a: eine vergrößerte schematische Seitenansicht der Umhüllungseinrichtung aus Fig. 1, mit einer Blockiereinrichtung in einer deaktivierten Stellung,
- Fig. 2b: eine vergrößerte schematische Seitenansicht gemäß Fig. 1, wobei die Blockiereinrichtung eine aktivierte Stellung einnimmt und
- Fig. 3 a und b: eine vergrößerte schematische Seitenansicht eines Schwenkelements aus Fig. 2 a und b, zur Verdeutlichung von entsprechenden Wirklinien eines Federelements der Blockiereinrichtung in den jeweiligen Positionen der Blockiereinrichtung.

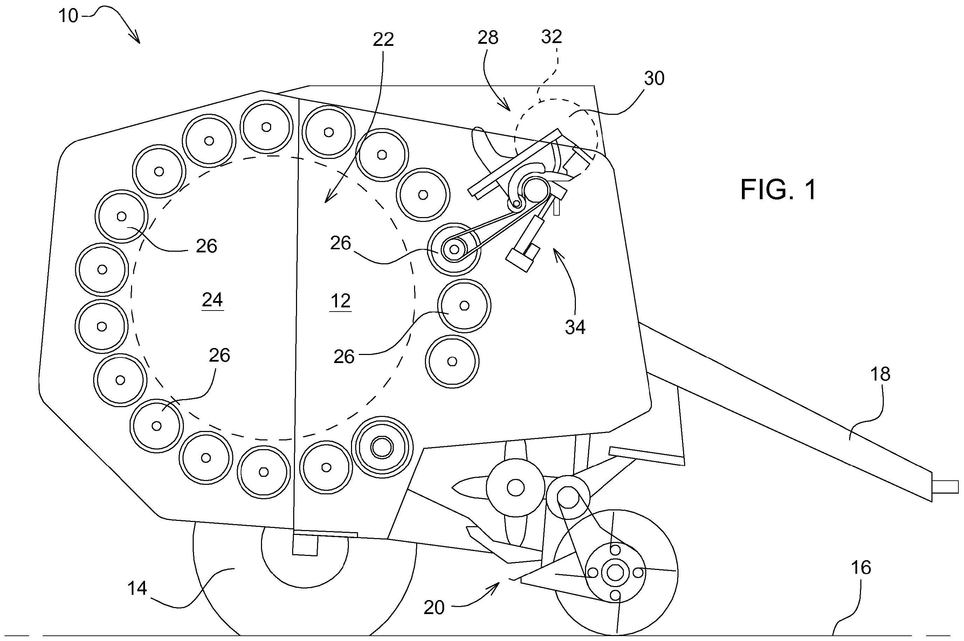

Eine in der Figur 1 schematisch dargestellte Ballenpresse 10, in der Art einer landwirtschaftlichen Ballenpresse zur Bildung rundzylindrischer Ballen, umfasst einen ersten Gehäuseteil 12, der sich mittels Rädern 14 auf einem Untergrund 16 abstützt und mittels einer Deichsel 18 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Erntegutaufnahmeeinrichtung 20 für Erntegut, wobei der erste Gehäuseteil 12 einen vorderen Teil eines Ballenpressraums 22 umgibt. An dem rückwärtigen oberen Eckbereich des ersten Gehäuseteils 12 befindet sich ein Lager (nicht gezeigt) für einen schwenkbaren zweiten Gehäuseteil 24, der einen hinteren Teil des Ballenpressraums 22 umgibt. Der zweite Gehäuseteil 24 gibt im geöffneten Zustand (nicht gezeigt) einen Auslass (nicht gezeigt) frei, durch welchen ein von der Ballenpresse 10 gepresster Ballen (nicht gezeigt) abgesetzt bzw. entladen oder ausgeworfen werden kann. Der schwenkbare zweite Gehäuseteil 24 kann mittels Stellmotoren (nicht gezeigt) betätigt werden (geöffnet und geschlossen werden) und stellt somit eine Auslassklappe für einen im Ballenpressraum 22 gepressten Ballen dar.

Die Ballenpresse 10, die gemäß der Darstellung in Figur 1 mit einem größenunveränderlichem Ballenpressraum 22 ausgebildet ist, enthält eine Vielzahl zueinander parallel verlaufender Presselemente zum Pressen von Erntegut in Form von Presswalzen 26 (exemplarisch wurden hier nur einige wenige Presswalzen 26 mit dem Bezugszeichen "26" versehen), deren Rotationsachsen bei geschlossenem zweiten Gehäuseteil 24 auf einem Kreisbogen gelegen sind, und von denen wenigstens einige angetrieben sind. Alternativ kann die Ballenpresse 10 auch in bekannter Weise als solche mit einem größenveränderlichen Ballenpressraum 22 bzw. als Ballenpresse 10 mit variablem Ballenpressraum 22 ausgebildet werden, wobei die Presselemente dann, ebenfalls in bekannter Weise, als Riemen, Gurte oder Kettenanordnungen (nicht gezeigt) ausgebildet sein können.

Ferner umfasst die Ballenpresse 10 eine Umhüllungseinrichtung 28, die mit einer Hüllmaterialrolle 30 bestückt ist. Als Hüllmaterial 32 kann Netz, Folie oder auch Garn eingesetzt werden. Die Umhüllungseinrichtung 28 umfasst ferner eine Zufuhreinrichtung (nicht gezeigt) für das Hüllmaterial 32, mittels welcher das Hüllmaterial 32 von der Hüllmaterialrolle 32 in den Ballenpressraum 22 geführt wird.

Nachdem der eigentliche Pressvorgang, also die Erntegutaufnahme und Bildung eines Ballens 10 durch die Presswalzen 26, abgeschlossen ist, wird die Umhüllungseinrichtung 28 aktiviert, und ein sich dem Pressvorgang anschließender Umhüllungsvorgang eingeleitet.

Bei Einleiten eines Umhüllungsvorgangs wird in einer Hüllmaterialeinführungsphase durch eine mechanisch ausgelöste Zufuhrbewegung Hüllmaterial 32 in Richtung des Ballenpressraums 22 geführt, so dass ein freies Hüllmaterialende mit dem sich in dem Ballenpressraum 22 rotierenden Ballen in Berührung kommen kann und das Hüllmaterial 32 mitgerissen und aufgenommen wird. Durch Rotation des Ballens wird das Hüllmaterial 32 in einer Hüllmaterialwickelphase in einer oder mehreren Lagen um den Umfang des Ballens gewickelt. Der Umhüllungsvorgang wird mit einer Hüllmaterialtrennphase, in der das um den Ballen gewickelte Hüllmaterial 32 von der Hüllmaterialrolle 32 durch eine Trenneinrichtung 34 getrennt wird, abgeschlossen.

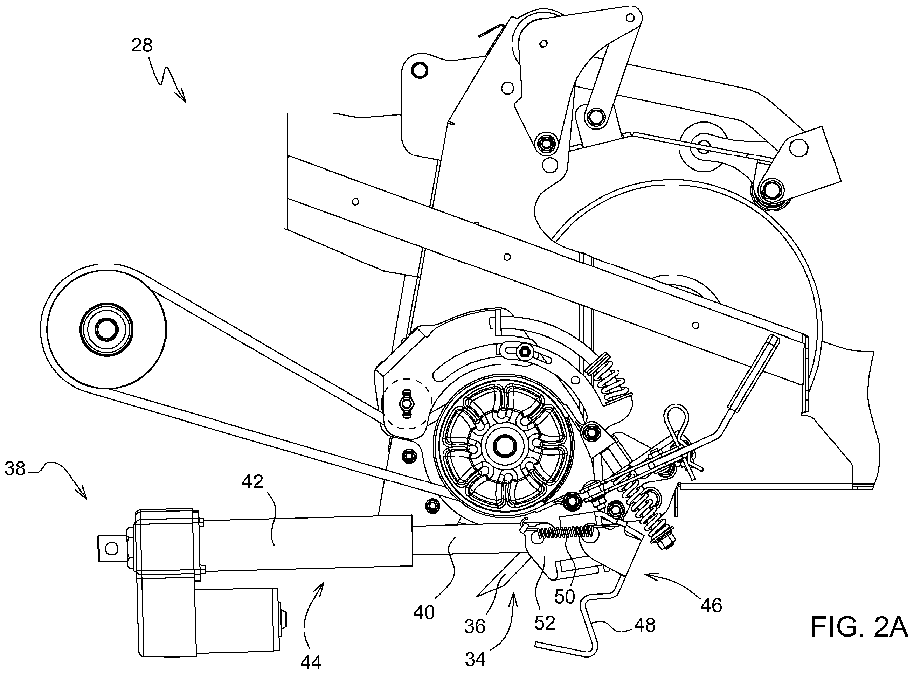

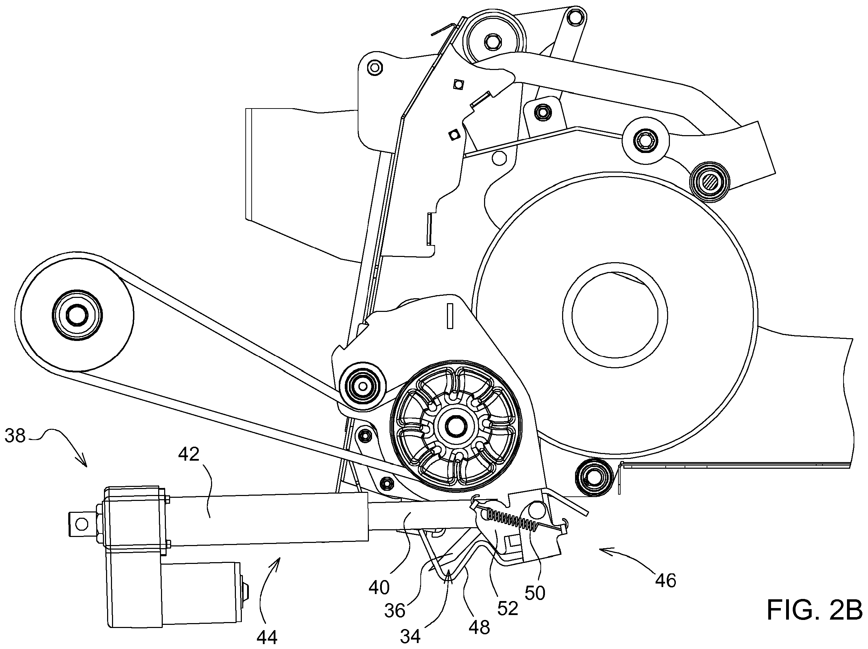

Wie in den Figuren 2a und 2b vergrößert gezeigt, weist die Trenneinrichtung 34 eine Messeranordnung 36 auf, die die Trennung des Hüllmaterials 32 in der Hüllmaterialtrennphase unterstützt, in dem sie das Hüllmaterial 32 in bekannter Art und Weise im Zusammenwirken mit einem nicht dargestellten Gegenhalter schneidet. Hierzu kann die Messeranordnung 36 mit Hilfe eines Antriebs 38, der im vorliegenden Ausführungsbeispiel in der Art einer einen Kolben 40 und einen Zylinder 42 aufweisenden Kolben-Zylinder-Anordnung 44 ausgebildet ist, aus einer in den Figuren 2a und 2b gezeigten inaktiven Position in eine nicht gezeigte Trennstellung verbracht werden. Wird der Kolben 40 der Kolben-Zylinderanordnung 44 bezogen auf den Zylinder 42 in diesen eingefahren, so führt die Messeranordnung 36 eine Schwenkbewegung aus.

Wie in den Figuren 2a und b dargestellt, weist die Umhüllungseinrichtung 28 darüber hinaus eine Blockiereinrichtung 46 auf, die die Trenneinrichtung 34 in ihrer inaktiven Stellung blockieren bzw. festlegen kann. Die Blockiereinrichtung 46 weist gemäß dem vorliegenden Ausführungsbeispiel ein Schwenkelement 48 sowie ein als Zugfeder ausgebildetes Federmittel 50 auf. Das Schwenkelement 48 ist an einem Rahmen 52 der Trenneinrichtung 34 um einen Anlenkpunkt 54 schwenkbar vorgesehen und wird durch das Federmittel 50, das einenends an einem ersten Befestigungspunkt 56 mit dem Rahmen 52 und andernends an einem zweiten Befestigungspunkt 58 an dem Schwenkelement 48 angreift, belastet. In Figur 2a wird das Schwenkelement 48 in einer ersten, deaktivierten Stellung A gezeigt, in der es nicht mit der Trenneinrichtung 34 zusammenwirkt und in der es durch das Federmittel 50 in Anlage mit einem an dem Rahmen 52 vorgesehenen Anschlag 60 gehalten wird. In Figur 2b hingegen nimmt das Schwenkelement 50 eine Stellung B ein, in der es die Trenneineinrichtung 34 bzw. die Messeranordnung 36 in der in den Figuren gezeigten inaktiven Position festlegt, in dem es eine Bewegung des Kolbens 44 mit Bezug auf den Zylinder 44 blockiert.

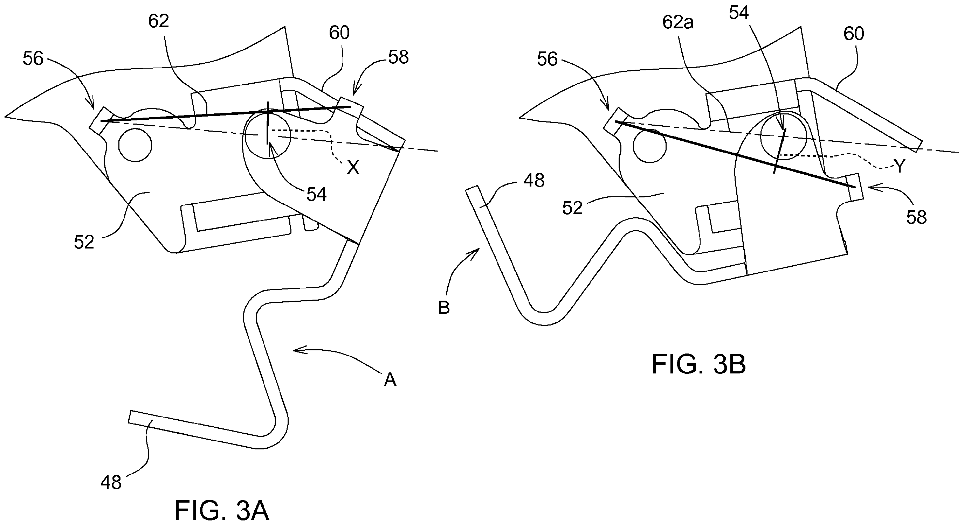

Es wird nun auch auf die Figuren 3a und 3b der Zeichnung Bezug genommen, in denen das Schwenkelement 48 vergrößert dargestellt ist und an denen die Wirkungsweise des Federmittels 50 detaillierter beschrieben werden soll. Hierzu wird in den Figuren zur Verdeutlichung nicht das Federmittel 50 selbst sondern eine Wirklinie 62 des Federmittels 50 gezeigt.

In Figur 3a nimmt das Schwenkelement 48 seine deaktivierte Stellung A ein. Das gemäß dem vorliegenden Ausführungsbeispiel als Zugfeder ausgebildet Federmittel 50 belastet das Schwenkelement 48 nun derart, dass es an dem Anschlag 60 zur Anlage kommt. Der Anlenkpunkt 54 liegt einerseits bzw. gemäß dem vorliegenden Ausführungsbeispiel unterhalb der Wirklinie 62 und weist zu dieser einen ersten Abstand X auf. Das Federelement 50 belastet das Schwenkelement 48 in dieser Stellung gegen den Uhrzeigersinn in Richtung des Anschlags 60.

In der in Figur 3b gezeigten aktivierten Stellung B ist der Anlenkpunkt 54 nun andererseits bzw. gemäß dem vorliegenden Ausführungsbeispiel oberhalb der Wirklinie 62 angeordnet und weist zu dieser einen dem Abstand X entgegengerichteten Abstand Y auf. Das Federmittel 50 belastet das Schwenkelement 48 in dieser Stellung nun in Richtung einer der Darstellung in Figur 3a entgegengesetzten Richtung im Uhrzeigersinn und zwar derart, dass es den Kolben 40 der Kolben-Zylinderanordnung 44 mit Bezug auf den Zylinder 42 blockiert und die Trenneinrichtung 34 somit in ihrer in der Figur 2a gezeigten inaktiven Position festgelegt ist.

Um das Schwenkelement 48 aus seiner in Figur 3a gezeigten deaktivierten Stellung A in die in der Figur 3b gezeigte, aktive Stellung B zu bringen, muss das Schwenkelement 48 über einen Totpunkt gelangen in dem sich die Wirklinie 62 durch den Anlenkpunkt 54 erstreckt bzw. der Anlenkpunkt 54 von der Wirklinie 62 nicht beabstandet ist (andeutungsweise durch eine unterbrochene Linie 62a dargestellt). Hierzu muss auf das Federmittel 50 bzw. das Schwenkelement 48 von außen eine Kraft aufgebracht werden. In der gezeigten Ausführungsform kann das Schwenkelement 48 manuell aus der in der in Figur 2a gezeigten Stellung gegen die Wirkung des Federmittels 50 in die in Figur 2b gezeigte Stellung gebracht werden.

Dies geschieht vorzugsweise, indem eine Bedienungsperson an dem Schwenkelement 48 angreift und es gegen die Wirkung es Federmittels 50 aus der einen Stellung (A, B) in die andere Stellung (A, B) überführt, wo es durch die Wirkung des Federmittels 50 sicher gehalten wird. Es ist aber auch denkbar, dass eine Bedienungsperson an dem Schwenkelement 48 indirekt, beispielsweise über eine Hebelanordnung, angreift oder aber ein Antrieb vorgesehen ist, mit dem das Schwenkelement 48 aus der einen in die andere Stellung (A, B) überführt werden kann oder von der es zusätzlich und/oder alternativ zu dem Federmittel 50 in seiner jeweiligen Stellung (A, B) gehalten werden kann.

## Patentansprüche

1. Umhüllungseinrichtung (28) zur Umhüllung eines Ballens mit einem Hüllmaterial (32) für eine Ballenpresse (10), mit einer eine Messeranordnung (36) aufweisenden, zwischen wenigstens einer Hüllmitteltrennposition und einer inaktiven Position bewegbaren Trenneinrichtung (34), wobei wenigstens eine Blockiereinrichtung (46) vorgesehen ist, die geeignet ist, die Trenneinrichtung (34) daran zu hindern, die Hüllmitteltrennposition einzunehmen, und die Trenneinrichtung (34) einen Antrieb (38) in der Art einer Kolben-Zylinder-Anordnung (44), aufweist bzw. mit einem solchen zusammenwirkt, wobei die Blockiereinrichtung (46) geeignet ist den Kolben (40) und/oder den Zylinder (42) der Kolben-Zylinderanordnung (44), in wenigstens einer Stellung festzulegen bzw. zu blockieren, und die Blockiereinrichtung (46) wenigstens ein Schwenkelement (48) aufweist, **dadurch gekennzeichnet, dass**
das Schwenkelement (48) derart ausgebildet ist, dass es in den Kolben (40) eingreifen bzw. diesen umgreifen kann.

2. Umhüllungseinrichtung nach Anspruch 1, **dadurch gekennzeichnet, dass** die Blockiereinrichtung(46) die Trenneinrichtung (34) zumindest im Wesentlichen in der inaktiven Position festlegen bzw. blockieren kann.

3. Umhüllungseinrichtung nach Anspruch 1 oder 2, **dadurch gekennzeichnet, dass** die Blockiereinrichtung (46) geeignet ist den Kolben (40) und/oder den Zylinder (42) der Kolben-Zylinderanordnung (44), in wenigstens einer zumindest im Wesentlichen eingefahrenen oder ausgefahrenen, Stellung festzulegen bzw. zu blockieren.

4. Umhüllungseinrichtung nach einem der vorherigen Ansprüche, **dadurch gekennzeichnet, dass** das Schwenkelement (48) einenends um einen Anlenkpunkt (54) schwenkbar an einem Rahmen (52) der Trenneinrichtung (34) angebracht und andernends ausgebildet ist, um mit dem Antrieb (38) zusammenzuwirken.

5. Umhüllungseinrichtung nach einem der vorherigen Ansprüche, **dadurch gekennzeichnet, dass** wenigstens ein Federmittel (50), insbesondere ausgebildet in der Art einer Zugfeder, vorgesehen ist, das die Blockiereinrichtung (46) bzw. das Schwenkelement (48) in Richtung einer deaktivierten Stellung (A), in der die Blockiereinrichtung (46) bzw. das Schwenkelement (48) nicht mit der Trenneinrichtung (34) zusammenwirkt, und/oder einer aktiven Stellung (B), in der die Blockiereinrichtung (46) bzw. das Schwenkelement (48) die Trenneinrichtung (34) daran hindert, die Hüllmitteltrennposition einzunehmen, belastet bzw. vorspannt.

6. Umhüllungseinrichtung nach Anspruch 5, **dadurch gekennzeichnet, dass** das Federmittel (50) an dem Schwenkelement (48) an einem außerhalb des Anlenkpunkts (54) gelegenen Befestigungspunkt (56) angreift, vorzugsweise derart, dass der Anlenkpunkt (54) in der aktiven Stellung (B) einerseits einer Wirklinie (62) des Federmittels (50) und in der deaktiverten Stellung (A) andererseits der Wirklinie (62) angeordnet ist.

7. Ballenpresse (10), insbesondere eine landwirtschaftliche Ballenpresse zur Bildung rundzylindrischer Ballen, mit einer Umhüllungseinrichtung (28) nach einem der Ansprüche 1 bis 6.

8. Verfahren zur Anpassung einer Ballenpresse (10) nach Anspruch 7 an ein Hüllmaterial (32), **dadurch gekennzeichnet, dass** die Blockiereinrichtung (36) durch eine Bedienungsperson insbesondere manuell und vorzugsweise gegen eine Belastung durch ein Federmittel (50) aus einer deaktivierten Stellung (A) in eine aktive Stellung (B) bzw. aus einer aktiven (B) in eine deaktivierte Stellung (A) überführt wird.

## Claims

1. Wrapping device (28) for wrapping a bale with a wrapping material (32) for a baler (10), having a separating device (34) that has a knife arrangement (36) and is movable between at least one wrapping means separating position and an inactive position, wherein at least one blocking device (46) is provided, which is suitable for preventing the separating device (34) from occupying the wrapping means separating position, and the separating device (34) has a drive (38) in the manner of a piston/cylinder arrangement (44) or cooperates with such a drive, wherein the blocking device (46) is suitable for fixing or blocking the piston (40) and/or the cylinder (42) of the piston/cylinder arrangement (44) in at least one position, and the blocking device (46) has at least one pivot element (48), **characterized in that**
the pivot element (48) is designed such that it can engage in or around the piston (40).

2. Wrapping device according to Claim 1, **characterized in that** the blocking device (46) can fix or block the separating device (34) at least substantially in the inactive position.

3. Wrapping device according to Claim 1 or 2, **characterized in that** the blocking device (46) is suitable for fixing or blocking the piston (40) and/or the cylinder (42) of the piston/cylinder arrangement (44) in at least one substantially retracted or extended position.

4. Wrapping device according to one of the preceding claims, **characterized in that** the pivot element (48) is attached to a frame (52) of the separating device (34) so as to be pivotable about a pivot point (54) at one end and is designed, at the other end, to cooperate with the drive (38).

5. Wrapping device according to one of the preceding claims, **characterized in that** at least one spring means (50), in particular designed in the manner of a tension spring, is provided, which loads or pretensions the blocking device (46) or the pivot element (48) in the direction of a deactivated position (A), in which the blocking device (46) or the pivot element (48) does not cooperate with the separating device (34), and/or an active position (B), in which the blocking device (46) or the pivot element (48) prevents the separating device (34) from occupying the wrapping means separating position.

6. Wrapping device according to Claim 5, **characterized in that** the spring means (50) acts on the pivot element (48) at a fastening point (56) located outside the pivot point (54), preferably such that the pivot point (54) is arranged on one side of a line of action (62) of the spring means (50) in the active position (B) and on the other side of the line of action (62) in the deactivated position (A) .

7. Baler (10), in particular agricultural baler for forming round-cylindrical bales, having a wrapping device (28) according to one of Claims 1 to 6.

8. Method for adapting a baler (10) according to Claim 7 to a wrapping material (32), **characterized in that** the blocking device (36) is transferred by an operator, in particular manually and preferably counter to a load by a spring means (50), from a deactivated position (A) into an active position (B) or from an active position (B) into a deactivated position (A).

## Revendications

1. Dispositif d'enrobage (28) pour l'enrobage d'une balle avec un matériau d'enrobage (32) pour une presse à balles (10), muni d'un dispositif de séparation (34) comprenant un agencement de lame (36), mobile entre au moins une position de séparation de moyen d'enrobage et une position inactive, au moins un dispositif de blocage (46) étant prévu, qui est approprié pour empêcher le dispositif de séparation (34) d'occuper la position de séparation de moyen d'enrobage, et le dispositif de séparation (34) comprenant un entraînement (38) à la façon d'un agencement piston-cylindre (44) ou coopérant avec un tel agencement, le dispositif de blocage (46) étant approprié pour immobiliser ou bloquer le piston (40) et/ou le cylindre (42) de l'agencement piston-cylindre (44) à au moins une position, et le dispositif de blocage (46) comprenant au moins un élément de pivotement (48), **caractérisé en ce que**
l'élément de pivotement (48) est configuré de telle sorte qu'il peut s'engager dans le piston (40) ou entourer celui-ci.

2. Dispositif d'enrobage selon la revendication 1, **caractérisé en ce que** le dispositif de blocage (46) peut immobiliser ou bloquer le dispositif de séparation (34) au moins essentiellement dans la position inactive.

3. Dispositif d'enrobage selon la revendication 1 ou 2, **caractérisé en ce que** le dispositif de blocage (46) est approprié pour immobiliser ou bloquer le piston (40) et/ou le cylindre (42) de l'agencement piston-cylindre (44) dans au moins une position au moins essentiellement rentrée ou déployée.

4. Dispositif d'enrobage selon l'une quelconque des revendications précédentes, **caractérisé en ce que** l'élément de pivotement (48) est disposé à une extrémité sur un cadre (52) du dispositif de séparation (34) de manière pivotante autour d'un point d'articulation (54) et est configuré à l'autre extrémité pour coopérer avec l'entraînement (38).

5. Dispositif d'enrobage selon l'une quelconque des revendications précédentes, **caractérisé en ce qu'**au moins un moyen à ressort (50), notamment configuré à la façon d'un ressort de traction, est prévu, qui sollicite ou précontraint le dispositif de blocage (46) ou l'élément de pivotement (48) en direction d'une position désactivée (A), dans laquelle le dispositif de blocage (46) ou l'élément de pivotement (48) ne coopère pas avec le dispositif de séparation (34), et/ou une position active (B), dans laquelle le dispositif de blocage (46) ou l'élément de pivotement (48) empêche le dispositif de séparation (34) d'occuper la position de séparation de moyen d'enrobage.

6. Dispositif d'enrobage selon la revendication 5, **caractérisé en ce que** le moyen à ressort (50) agit sur l'élément de pivotement (48) à un point de fixation (56) situé en dehors du point d'articulation (54), de préférence de telle sorte que le point d'articulation (54) est agencé dans la position active (B) d'un côté d'une ligne d'action (62) du moyen à ressort (50) et dans la position désactivée (A) de l'autre côté de la ligne d'action (62).

7. Presse à balles (10), notamment presse à balles agricole pour la formation de balles cylindriques rondes, munie d'un dispositif d'enrobage (28) selon l'une quelconque des revendications 1 à 6.

8. Procédé d'adaptation d'une presse à balles (10) selon la revendication 7 à un matériau d'enrobage (32), **caractérisé en ce que** le dispositif de blocage (36) est transféré par un opérateur, notamment manuellement et de préférence à l'encontre d'une sollicitation par un moyen à ressort (50), d'une position désactivée (A) dans une position active (B) ou d'une position active (B) dans une position désactivée (A).
